# EUROPEAN PATENT SPECIFICATION

(11) **EP 4 312 871 B1**
(45) Date of publication and mention of the grant of the patent: **30.04.2025**
(21) Application number: 22720122.5
(22) Date of filing: 04.04.2022
(51) Int. Cl.: A61C 7/08, A61C 7/00

(54) **METHOD FOR FORMING A DENTAL ALIGNER**
VERFAHREN ZUR HERSTELLUNG EINER ZAHNSCHIENE
PROCÉDÉ DE FORMATION D'UN ALIGNEUR DENTAIRE

(30) Priority: 02.04.2021 US 202163170441 P
(43) Date of publication of application: 07.02.2024
(73) Proprietor: Align Technology, Inc., San Jose, CA 95134 (US)
(72) Inventor: LIM, Tzishing, Jesse, San Jose, CA 95134 (US); WU, Fuming, San Jose, CA 95134 (US); YAU, Eric, San Jose, CA 95134 (US); PESENTI, Bastien, San Jose, CA 95134 (US); SATO, Jun, San Jose, CA 95134 (US)
(74) Representative: Hancox, Jonathan Christopher
(86) International application number: PCT/US2022/023292
(87) International publication number: WO 2022/212943

(56) References cited:
- WO-A1-2020/236822
- US-A1- 2020 000 551
- US-A1- 2020 125 069

## Description

### BACKGROUND

Orthodontic appliances, such as dental aligners, generally work by applying forces to a patient's teeth according to a treatment plan to reposition and straighten the patient's teeth. When a force is applied to a tooth, the force is transmitted through the root of the tooth to the ligaments and bone of the jaw. According to the direction of the force, there may be areas of pressure and tension on these supporting structures. Several different types of tooth movement may occur during orthodontic treatment. Because of the nature of the attachment of the teeth to the bone, the movements are likely to be complex, but may generally be characterized as including tipping movements, rotational movements, torque movements and vertical movements.

To move a tooth predictably, a force needs to be predictably applied in a desired direction, with a desired magnitude, and at a desired position on the tooth. Changing the direction, magnitude, or point of force application will affect the quality of the tooth displacement. For example, if mesial movement of a tooth is indicated, a force to push or pull the tooth in a mesial direction must be applied.

In some circumstances, it may be difficult to achieve a particular tooth movement using conventional orthodontic appliances. For example, under certain circumstances, it may be difficult for conventional orthodontic appliances to achieve translational movement of a tooth without an amount of undesirable tipping of the tooth. This can result in a longer treatment time or involve implementing a series of complicated movement steps to achieve a desired tooth position. Accordingly, it would be desirable to have improved dental appliances and methods for controlling and optimizing orthodontic tooth movement.

US 2020/000551 A1 discloses a method for simulating dental treatments which includes creating a 3D model of a patient's teeth based on a 2D image, adjusting it to reflect treatment goals, and generating a 2D image showing the estimated outcome of the treatment.

### SUMMARY OF THE DISCLOSURE

The invention is as defined in the appended claims.

Described herein are orthodontic appliances, such as dental aligner, and methods of making and using the same. The orthodontic appliances may have features designed to apply customized forces to a patient's teeth. The orthodontic appliances may have a modified edge that is designed to apply forces to one or more teeth from a direction closer to and/or farther from a center of resistance of the one or more teeth. Such edge modifications can allow more flexibility for creating a treatment plan and may result in shorter treatment times compared to conventional orthodontic treatments.

In some cases, the modified edge includes at least a portion that extends beyond the gumline in the tooth root direction. This may change the mechanical properties of the portions of at least part of the appliance and allow the appliance to provide repositioning forces to one or more teeth closer to a center of resistance of the one or more teeth. This modification can result in a stiffened aligner compared to aligners having edges that follow a gumline of the patient's dentition. The change in the force system of the aligner due to the modification of the aligner edge may be tailored and tuned for specific tooth movements that conventional aligners may not be able to achieve. For example, in certain circumstances, increased force may be directed towards the center of root. In other circumstances, the appliance may have increased stiffness so that shape modifications, such as corrugation, may be added to optimize the applied forces to the teeth.

Described herein are also methods and workflow for determining appropriate edge configuration based on given design inputs to provide optimized application of force system and product performance/function.

For example, described herein are methods of forming a dental aligner, comprising: determining a first orientation and a second orientation of a tooth of a virtual model of a patient's teeth as part of a treatment plan; forming a virtual dental aligner for moving the tooth from the first orientation to the second orientation, wherein forming the virtual dental aligner includes adjusting at least a portion of a gingival edge to adjust a net repositioning force vector applied by the virtual dental aligner with respect to a center of resistance of the tooth; and forming the dental aligner based on the virtual dental aligner with the adjusted edge.

In any of these methods, at least a portion of the gingival edge may be adjusted in a direction away from a root apex of the tooth so that the virtual dental aligner applies the net repositioning force vector closer to the center of resistance. In some methods, the method may include adjusting the gingival edge in the direction away from the root apex applies a greater repositioning force to the tooth. In some examples, at least a portion of the gingival edge is adjusted in a direction toward a root apex of the tooth so that the virtual dental aligner applies the net repositioning force vector farther from the center of resistance.

Adjusting the gingival edge in the direction toward the root apex may apply a lesser repositioning force to the tooth.

In any of these examples, moving the tooth from the first orientation to the second orientation may be performed in accordance with a stage of the treatment plan.

Any of these methods may include adjusting the gingival edge. For example, the gingival edge may be adjusted to minimize an amount of rotation of the tooth. The gingival edge may be modified to achieve a target amount of rotation of the tooth.

The methods described herein may include forming at least one attachment feature within the virtual dental aligner that is shaped and sized to accept a corresponding at least one dental attachment attached to the tooth. Interaction of the at least one dental attachment with the at least one attachment feature may modify the repositioning force applied by the virtual dental aligner to the tooth.

Any of these methods may include forming at least a second portion of the gingival edge of the dental aligner at a gumline of the virtual model.

The tooth may be a first tooth and the at least a portion of the gingival edge may be a first portion of the gingival edge, the method further comprising: adjusting a second portion of the gingival edge to adjust a net repositioning force vector applied by the virtual dental aligner to the second tooth with respect to a second center of resistance of the second tooth. For example, adjusting the gingival edge may include adjusting a first portion of the gingival edge in a direction toward the root apex of the first tooth and adjusting a second portion of the gingival edge in a direction away from the root apex of the second tooth. Any of these methods may include forming at least a third portion of the gingival edge of the dental aligner at a gumline of the virtual model.

In some examples, forming the virtual dental aligner includes modifying a wall shape of the virtual dental aligner to apply the repositioning forces according to at least a segment of the treatment plan. Forming the virtual dental aligner may include modifying a wall thickness of the virtual dental aligner to apply the repositioning forces according to at least a segment of the treatment plan.

Also described herein are orthodontic aligners, including: a shell defining a plurality of cavities for receiving teeth of a patient and a gingival edge surrounding the plurality of cavities, the shell including: a first section configured to receive and apply first repositioning forces to a first tooth, first section including a first portion of the gingival edge configured to follow the patient's gumline; and a second section configured to receive and apply second repositioning forces to a second tooth, the second section including a second portion of the gingival edge configured to be gingivally located with respect to the patient's gumline.

The first portion may be configured to receive and apply first repositioning forces to a first set of multiple teeth. The second section of the shell may be configured to receive and apply second repositioning forces to a second set of multiple teeth. The cavity walls may be made of one or more polymer materials configured to resiliently apply the forces to the first and second teeth.

The first repositioning forces may include a first net repositioning force vector, and the second repositioning forces include a second net repositioning force vector, wherein the first net repositioning force vector is directed closer to a center of resistance of the first tooth than the second net repositioning force vector is directed to a center of resistance of the second tooth.

In any of these examples, the shell may further include a third portion configured to receive and apply a third repositioning force to a third tooth, the third portion including a third segment of the gingival edge configured to be located toward a root apex of the third tooth with respect to the patient's gumline. The shell may be made of one or more polymer materials and may be configured to resiliently apply the first and second repositioning forces to the first and second teeth.

Also described herein are systems of orthodontic aligners that include: a first aligner defining a plurality of cavities arranged to receive a patient's teeth, wherein at least a portion of a gingival edge of the first aligner is configured to be a first distance from the patient's gumline; and a second aligner defining a plurality of cavities arranged to receive the patient's teeth, wherein at least a portion of a gingival edge of the second aligner is configured to be a second distance from the patient's gumline, the first distance different than the second distance.

The gingival edge of the first aligner may cause the first aligner to apply a first net repositioning force vector to a tooth of the patient's teeth, the gingival edge of the second aligner may cause the second aligner to apply a second net repositioning force vector to the tooth of the patient's teeth, and the first net repositioning force vector may be directed closer to a center of resistance of the tooth compared to the second net repositioning force vector.

In some systems described herein, the gingival edge of the first aligner has a first varied profile with respect to the patient's gumline, wherein the gingival edge of the second aligner has a second varied profile with respect to the patient's gumline, and wherein the first varied profile is different than the second varied profile.

The first aligner may be configured to reposition the patient's teeth in accordance with a first segment of a treatment plan, and the second aligner may be configured to reposition the patient's teeth in accordance with a second segment of the treatment plan.

The system of orthodontic aligners may be configured to reposition at least one of the patient's teeth from an initial orientation to a target orientation in accordance with a treatment plan.

The systems described herein may include a third aligner defining a plurality of cavities arranged to receive the patient's teeth, wherein at least a portion of a gingival edge of the third aligner is configured to be a third distance from the patient's gumline, the third distance different than the first distance and the second distance.

All of the methods and apparatuses described herein, in any combination, are herein contemplated and can be used to achieve the benefits as described herein.

### BRIEF DESCRIPTION OF THE DRAWINGS

A better understanding of the features and advantages of the methods and apparatuses described herein will be obtained by reference to the following detailed description that sets forth illustrative embodiments, and the accompanying drawings of which:
FIGS. 1A-1C illustrate examples of different forces applied to a tooth and the resultant tooth movement.
FIG. 2 illustrates examples of dental aligners with gingival edges having different heights.
FIGS. 3A and 3B illustrate side views of the dental aligners of FIG. 2 showing different bending stiffness of the dental aligners.
FIGS. 3C and 3D illustrate front views of the dental aligners of FIG. 2 showing different bending stiffness of the dental aligners.
FIG. 4 illustrates side views of the dental aligners of FIG. 2 showing differing stiffness in a stretching direction of the dental aligners.
FIG. 5 illustrates a perspective view of the dental aligners of FIG. 2 showing stiffness along different dimensions of the dental aligners.
FIG. 6 illustrates a perspective view an example dental aligner having a varied gingival edge profile.
FIG. 7 illustrates various perspective views of an example dental aligner having a gingival edge with an outward extending gingival edge.
FIG. 8 illustrates a perspective view of an example dental aligner having a gingival edge with modifications for ancillary instruments.
FIG. 9 illustrates a flowchart indicating an example method of forming a dental aligner with a modified gingival edge.
FIG. 10 illustrates an example logic flow diagram indicating considerations for implementing one or more gingival edge modifications.

### DETAILED DESCRIPTION

Described herein are orthodontic appliances and methods for apply customized forces to a patient's teeth. The methods may include forming an orthodontic appliance by adjusting an edge of the dental appliance to adjust a repositioning force with respect to a center of resistance of one or more teeth. Such methods may allow more flexibility in the design of orthodontic appliances.

Generally, orthodontic appliances, such as dental aligners, apply force to portions of a patient's teeth to move the teeth in a prescribed manner in accordance with a dental treatment plan. Determining a treatment plan may include modeling the movement of the teeth from an initial orientation (e.g., prior to treatment) to a target orientation (e.g., upon completion of treatment). Such modeling may be performed using computer modeling techniques where a virtual model of the teeth is manipulated to determine aspects related to the movement of the teeth. Such modeling can be used to determine aspects of an orthodontic appliance for optimizing specific forces applied to the teeth in accordance with the treatment plan.

In some cases, the treatment plan includes moving the teeth through multiple stages of the treatment plan to accomplish the target orientation of the teeth. In some instances, each stage of the treatment plan is associated with a dental aligner that the patient wears on their teeth. For example, a first aligner may be configured to move the patient's teeth from a first orientation to a second orientation, a second aligner may be configured to move the patient's teeth from the second orientation to a third orientation, and so on until the target orientation of the teeth is accomplished.

The movement of a tooth can be determined in relation to a center of resistance of the tooth. The center of resistance corresponds to the point on a tooth through with a force can be applied that will move the tooth in a direction of the force without tipping or rotating the tooth. The center of resistance may take into account the resistive forces from the supporting structures surrounding the tooth, such as ligaments and bone. The center of resistance may also take into account the dimensions of the tooth, such as the length and mass of the tooth. Adjusting a force to a tooth with respect to the center of resistance of the tooth can change the amount of translation and/or rotation of the tooth.

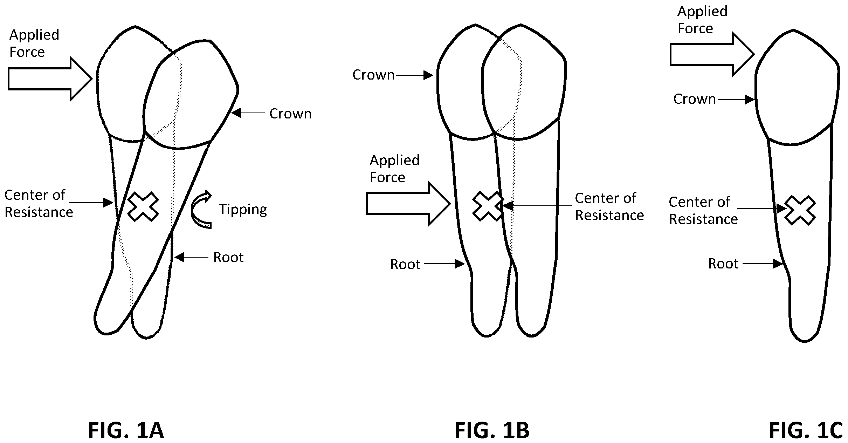

To illustrate, FIGS. 1A-1C show examples of different forces applied to a tooth and the resultant tooth movement. In FIG. 1A, a force is applied to a crown of a tooth. Since the center of resistance of the tooth is at the root of the tooth, the applied force causes the tooth to rotate and/or tip in the direction of the applied force. Note that the applied force may also cause the tooth to translate to some extent, depending at least in part on how close the direction of force is applied to the center of resistance. In FIG. 1B, a force is applied through the center of resistance of the tooth, which causes the tooth to translate in the direction of the applied force with little to no rotation. In FIG. 1C, a force is applied at an upper portion of the crown (farther away from the center of resistance compared to FIG. 1A). Depending on the magnitude of the force, a force applied too far from the center of resistance can cause little to no movement (e.g., translation and/or rotation) of the tooth.

The dental aligners described herein can be configured to apply forces to a patient's teeth based on how the forces are applied with respect to a center of resistance of one or more of the teeth. The applied forces can be adjusted based a shape of the dental aligners, for example, based at least in part on a height of gingival edge.

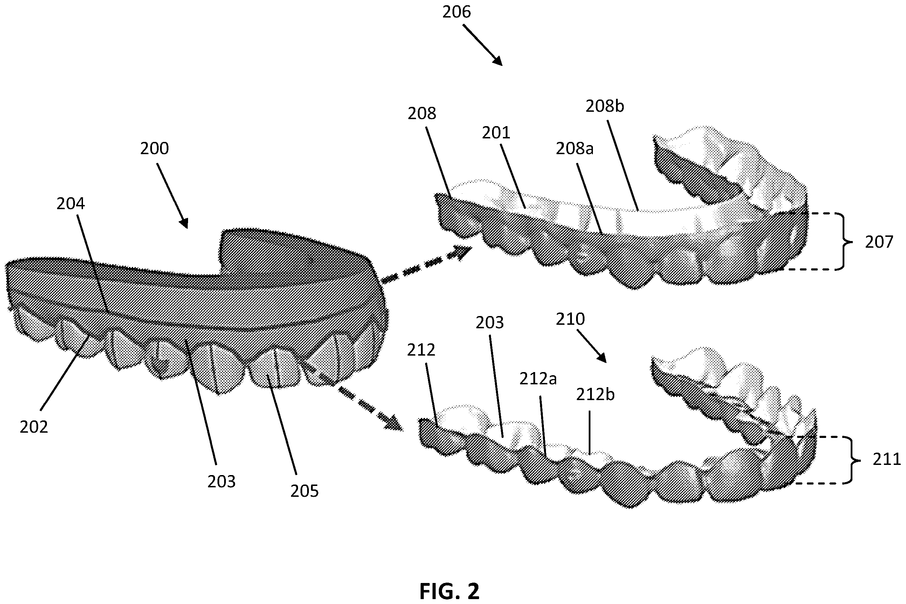

FIG. 2 illustrates examples of dental aligners with gingival edges having different heights. In general, the shape and size of a dental aligner can be based on a three-dimensional (3D) model (e.g., virtual model or physical model) of a patient's dental arch 200. The 3D model of the dental arch 200 may be acquired using, for example, a dental scanning apparatus designed to collect images of the patient's teeth. Examples of suitable dental scanning apparatuses may include those sold by Align Technologies, Inc. headquartered in San Jose, California, U.S.A.

FIG. 2 shows a first dental aligner 206 and a second dental aligner 210 (e.g., virtual and/or physical dental aligners) that may be formed based on the shape and size of the 3D model of the dental arch 200. For example, the first and second aligners 206, 210 can include a first set of cavities 201 and a second set of cavities 203, respectively, that are arranged to accept corresponding teeth of the 3D model of the dental arch 200. The first and second aligners 206, 210 may be in the form of shells that are configured to at least partially cover surfaces of the dental arch 200.

The shell walls that the define the cavities 201, 203 may be shaped to apply forces to the teeth in accordance with a treatment plan. For example, the walls may define the shapes of the cavities 201, 203 with slightly different orientations compared to the orientations of the teeth of the 3D model of the dental arch. This offset can cause the walls of the first and second aligners 206, 210 to apply forces to the teeth in accordance with a treatment plan. As described above, a treatment plan may include a series of stepwise movements of the teeth with each aligner associated with each stage of the treatment plan.

In some cases, the walls of the first and second aligners 206, 210 are made of a resilient material that is configured to resiliently apply forces to the teeth. For example, the walls may be made of one or more polymer materials.

The walls of the first and second aligners 206, 210 can define gingival edges that surround the cavities 201, 203 and extend in the gingival direction (toward the gingiva 203 of the dental arch 200). For example, the first dental aligner 206 includes a gingival edge 208 and the second dental aligner 210 includes a gingival edge 212. The gingival edge can include different portions. For example, the gingival edge 208 of the first dental aligner 206 can include an outer (e.g., buccal/labial) gingival edge portion 208a and an inner (e.g., lingual/palatal) gingival edge portion 208b. Likewise, the gingival edge 212 of the second dental aligner 206 can include an outer (e.g., buccal/labial) gingival edge portion 212a and an inner (e.g., lingual/palatal) gingival edge portion 212b.

As shown, the gingival edge 212 of the second dental aligner 210 follows the gumline 202 between the gums (gingiva) and the exposed part of the teeth of the dental arch 200. This may result in the edge 212 having a scalloped shape in accordance with the apexes and troughs along the gumline 202. One possible advantage of having the gingival edge 212 following the gumline 202 is that the aligner 210 may be less apparent when the patient wears the aligner 210, which may be aesthetically desirable. This edge configuration gives the second dental aligner 210 a second average height 211 in the rostral-caudal direction (as measured from the incisal/occlusal exterior surface of the second dental aligner 210 to the gingival edge 212 of the second dental aligner 210).

In the first dental aligner 206, the gingival edge 208 follows a path 204 along the gingiva 203 that is a distance from the gumline 202 of the dental arch 200. Thus, the first dental aligner 206 has a first average height 207 in the rostral-caudal direction (as measured from the incisal/occlusal exterior surface of the second dental aligner 206 to the gingival edge 208 of the second dental aligner 206), which is greater than the second average height 211 of the second dental aligner 210. In some cases, the gingival edge 208 of the first aligner 206 may have a straighter shape compared to the scalloped shape second edge 212 of second aligner 210.

The first dental aligner 206 can apply different repositioning forces on the teeth compared to the second dental aligner 210 because of their different gingival edge heights. For example, the extended gingival edge 208 of first dental aligner 206 may provide repositioning net force vector closer to the centers of resistance at the roots of the teeth compared to the second dental aligner 210. This may allow the first aligner 206 to apply forces that providing more translational tooth movement and less of other types of tooth movements (e.g., tipping and/or rotational) compared to the second aligner 210. In some cases, this may also allow the first dental aligner 206 to provide greater repositioning forces on the teeth compared to the second dental aligner 210 (given that the first and second dental aligners 206, 210 are made of material with the same stiffness and thickness). Thus, the first dental aligner 206 may be configured to move teeth in a shorter time than the second dental aligner 210, thereby reducing the treatment time.

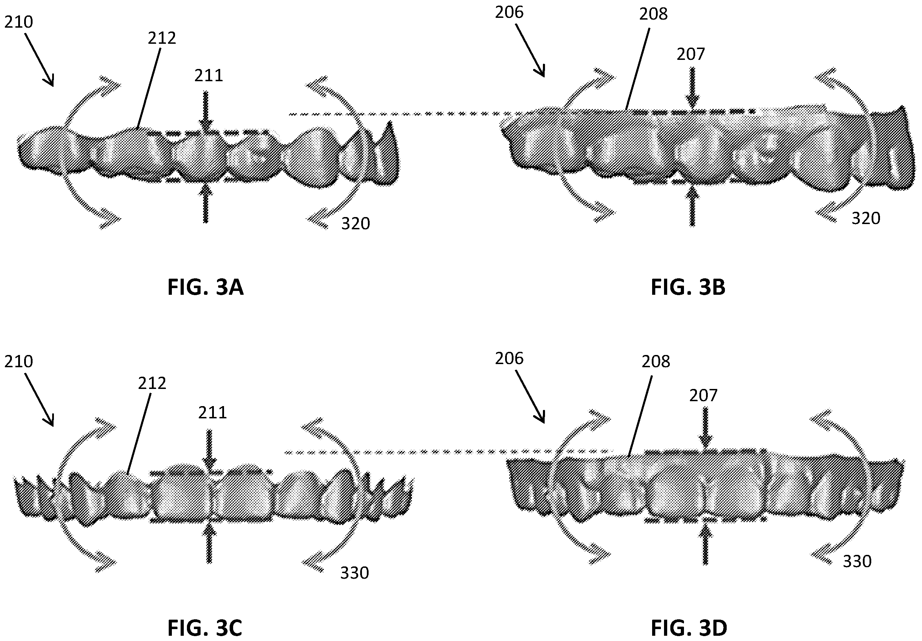

FIGS. 3A and 3B illustrate side (sagittal) views of the first and second dental aligner 206, 210 and FIGS. 3C and 3D illustrate front views the first and second dental aligner 206, 210. The greater height 207 of the first dental aligner 206 can result in the dental aligner 206 having a greater bending stiffness in the sagittal plane 320 and frontal plane 330 (indicated by arrows) compared to the second dental aligner 210, given that the first and second dental aligners 206, 210 are made of the same material and have the same thickness. Since intrusion/extrusion movement of an individual tooth relies on the bending of the aligner with anchorage of neighboring teeth, a stiffened aligner in bending increases the intrusion/extrusion driving force.

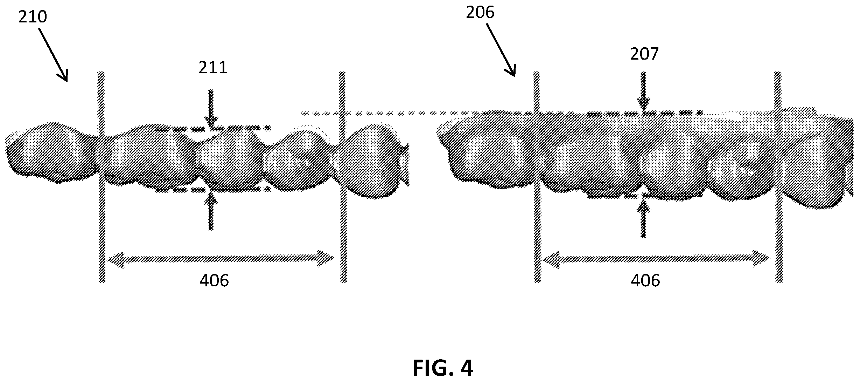

FIG. 4 illustrates another side (sagittal) view of the first and second dental aligners 206, 210. The greater height 207 of the first dental aligner 206 can result in the first aligner 206 having a higher stiffness in a stretching direction 406 along the arch compared to the second aligner 210. A stiffened aligner along the arch can result in a higher force for a given amount of movement of any teeth in a mesial-distal direction, and higher angulation moments.

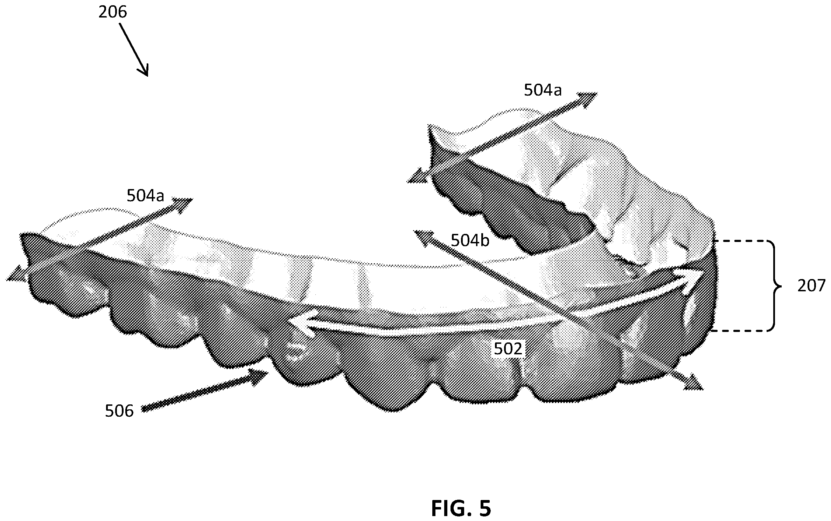

FIG. 5 illustrates another view of the first aligner 206 showing how the height 207 relates to stiffness along different dimensions of the first aligner 206. The greater height 207 of the first aligner 206 results in an increase of stiffness of first aligner 206 (compared to the second aligner 210) along a transverse plane 502. Thus, the bending stiffness of the first aligner 206 parallel to the transverse plane 502 is greater than the second aligner 210. Since buccal-lingual movement of tooth depends on the transverse bending of the aligner (based on an anchoring neighboring tooth), the buccal-lingual force for a given stage increases. A change of inclination angle moment (e.g., as indicated by arrows in both terminal molars 504a and central incisors 504b) also increases with the greater height 207. The greater stiffness can also increase the contact force between any aligner features and tooth surface, making such features more effective by providing higher biomechanical driving forces. Examples of such aligner features can include indentations 506 to accommodate attachments attached to one or more teeth (e.g., axial rotation attachments and/or mesial-distal root control attachments), pressure points, and/or power ridges.

In some instances, the dental aligner has a gingival edge that defines a shorter rostral-caudal dimension with respect to the gumline 202. That is, the gingival edge may follow a path at least partially along one or more teeth 205 of the dental arch 200 (e.g., below the gumline 202). Such configuration may result in a more flexible aligner generally in all directions with less aligner material. Such flexible aligners may be able to apply lower orthodontic forces for a given stage (displacement/orthodontic movement) of a treatment plan. In some cases, such flexible aligners are designed to provide little or no movement of one or more teeth. Also, moving the applied force farther from the root apex (toward the teeth crowns) may direct a net force vector away from the centers of resistance of the teeth.

In some cases, a system of orthodontic aligners may include aligners having different gingival edge heights to accomplish target teeth orientations. For example, a first aligner that is configured to move the patient's teeth in accordance with a first stage of a treatment plan may have a gingival edge that is a first distance from a gumline of the patient, and a second aligner that is configured to move the patient's teeth in accordance with a second stage of the treatment plan may have a gingival edge that is a second distance from the gumline of the patient that is different than the first distance. In a particular example, a first aligner for a first stage of a treatment plan may have a gingival edge that extends in the gingival direction with respect to the gumline (e.g., aligner 206), and a second aligner for a second stage of the treatment plan may have a gingival edge that follows the gumline (e.g., aligner 210). In another example, a first aligner for a first stage of a treatment plan may have a gingival edge that extends in the gingival direction with respect to the gumline (e.g., aligner 206), a second aligner for a second stage of the treatment plan may have a gingival edge that follows the gumline (e.g., aligner 210), and a third aligner for a third stage of the treatment plan may have a gingival edge that extends toward the teeth crowns with respect to the gumline.

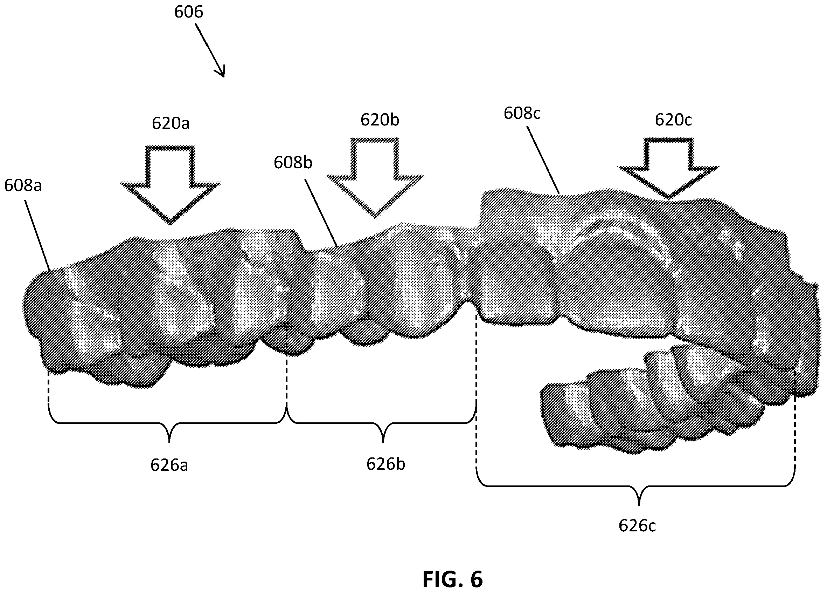

In some examples, the gingival edge of the aligner has a varied profile along a length of the aligner to provide different forces on different teeth. FIG. 6 illustrates an exemplary dental aligner 606 having a varied edge profile. In this example, a first edge portion 608a has a first height, a second edge portion 608b has a second height, and a third edge portion 608c has a third height. A first section 620a of the dental aligner 606 (with the first edge portion 608a) includes cavity walls configured to apply repositioning forces to a first set of teeth 626a (e.g., molar teeth), a second section 620b of the dental aligner 606 (with the second edge portion 608b) includes cavity walls configured to apply repositioning forces to a second set of teeth 626b (e.g., premolar teeth), and a third section 620c of the dental aligner 606 (with the third edge portion 608c) includes cavity walls configured to apply repositioning forces to a third set of teeth 626c (e.g., incisors).

The third edge portion 624 may extend beyond the gumline farther than the first edge portion 620 and second edge portion 622. The different sections 620a, 620b, 620c of the dental aligner 606 may be customized to apply optimized orthodontic forces to the different sets of teeth 626a, 626b, 626c. For example, the third section 620c, due to its longer gingival edge 608c, may apply net force vector closer to the centers of resistance of the third set of teeth 626c compared to the first edge portion 620 and second edge portion 622 applying forces to their respective sets of teeth 626a and 626b due to their relatively shorter gingival edges 626a, 626b. Likewise, the first section 620a may apply a net force vector closer to the centers of resistance of the first set of teeth 626a compared to the second edge portion 622 applies to the second set of teeth 626b since the gingival edge 608a of the first section 620a is longer than the gingival edge 608b.

The example view of dental aligner 606 in FIG. 6 shows a gingival edge having at least three sections 620a, 620b, 620c having different gingival edge heights. However, the dental aligners described herein are not limited to this configuration. For example, the dental aligners described herein may have any number of sections with different gingival edge heights (e.g., 1, 2, 3, 4, 5, 6, 8, 10, 12, 14, 16, 18 or 20 heights).

The example view of dental aligner 606 in FIG. 6 shows a gingival edge having at a first section 620a configured to receive three teeth, a second section 620b configured to receive two teeth, and a third section 620c configured to receive four teeth. However, the dental aligners described herein are not limited to this configuration. For example, the dental aligners described herein may have sections configured to receive any number of teeth (e.g., 1, 2, 3, 4, 5, 6, 8 or 10 teeth).

The example view of dental aligner 606 in FIG. 6 shows a varied profile on an outer (e.g., buccal/labial) gingival edge of the aligner 606. However, the dental aligners described herein are not limited to this configuration. The dental aligners described herein can have varied profiles on any portion of the gingival edge. For example, an aligner may have a varied profile on an outer (e.g., buccal/labial) gingival edge and/or an inner (e.g., lingual/palatal) gingival edge.

A series of orthodontic aligners may include aligners having different varied gingival edge profiles. For example, a first aligner of a series of aligners may correspond to the dental aligner 606 having at least three sections 620a, 620b, 620c with different gingival edge heights, and a second aligner of the series may include a different number of sections (e.g., 1, 2, 4, 5, 6, 7, 8 or 9 sections) having different gingival edge heights. Additionally or alternatively, the different sections may be configured to receive different sets of teeth. In this way, different aligners in the series may have a different gingival edge configuration optimized to apply repositing forces to the teeth according to each stage of a treatment plan.

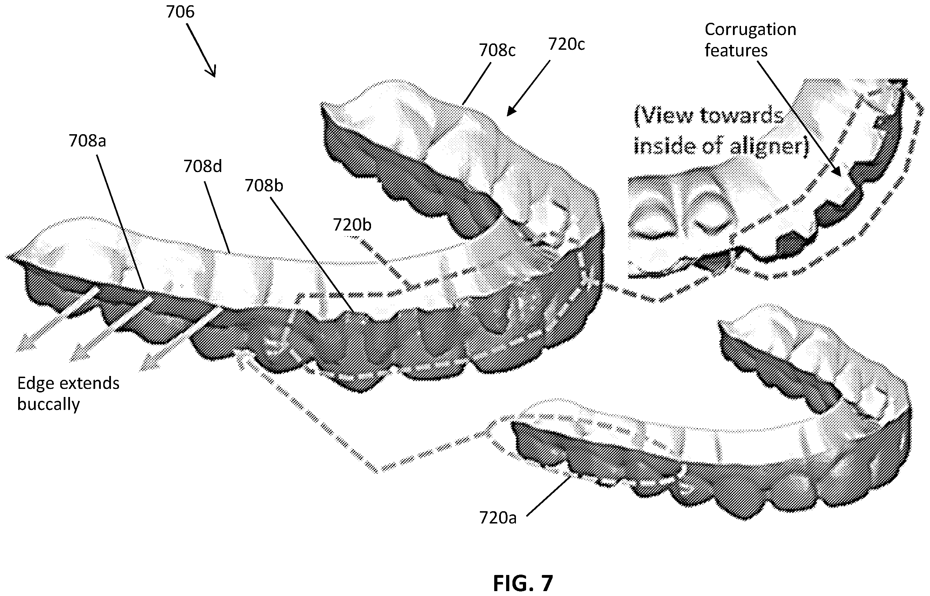

In some cases, at least part of the gingival edge of the aligner extends in a direction away from the patient's dental arch. FIG. 7 illustrates an exemplary dental aligner 706 having a gingival edge with examples of such features. A first section 720a of the aligner 706, which receives molars, includes a gingival edge portion 708a that extends in the gingival direction (toward the root apexes) with respect to the gumline, and also extends buccally with respect to the dental arch. This can move the gingival edge portion 708a away from patient's gums, which may relieve pressure on the soft tissue of the gums and enhance patient comfort.

A second section 720b of the aligner 706, which receives canines and incisors, has a gingival edge portion 708b that extends in the gingival direction (toward the root apexes) with respect to the gumline and that includes corrugated features that extend buccally/labially with respect to the dental arch. Such corrugation may enhance stiffness of the gingival edge portion 708b, stiffness of the aligner 706 in the transverse and stretching directions and/or provide other mechanical advantages (See, e.g., FIGS. 3A-3D, 4 and 5).

In some cases, a third section 720c includes a gingival edge portion 708c that extends in the gingival direction (toward the root apexes) with respect to the gumline, and also extends buccally with respect to the dental arch. In some cases, an internal edge portion 720d that extends in the gingival direction (toward the root apexes) with respect to the gumline, and also extends in a lingual or palatal direction (depending on whether the aligner 706 is for the upper or lower dental arch) with respect to the dental arch.

The gingival edge of an aligner may be dimensionally adjusted in a direction in threedimension space. For example, the gingival edge may be offset with respect to a center axis/long axis of the aligner to prevent unwanted contact with soft tissue (e.g., gums), such as the first section 720a of the aligner 706. In another example, the gingival edge may be inset in the interproximal regions between the teeth to contact a specific region of one or more teeth near the gumline.

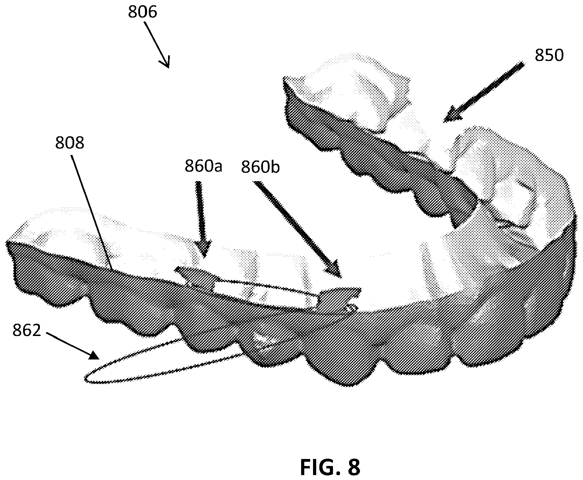

The dental aligners described herein may have a gingival edge with shape modifications designed for interaction with ancillary instruments. FIG. 8 illustrates an exemplary dental aligner 806 having a gingival edge 808 having examples of such modifications. The gingival edge 808 includes a cutout 850 configured to accommodate one or more ancillary instruments attached to a tooth. The gingival edge 808 includes hooks 860a and 860b that are configured to retain one or more elastics 862 and/or buttons.

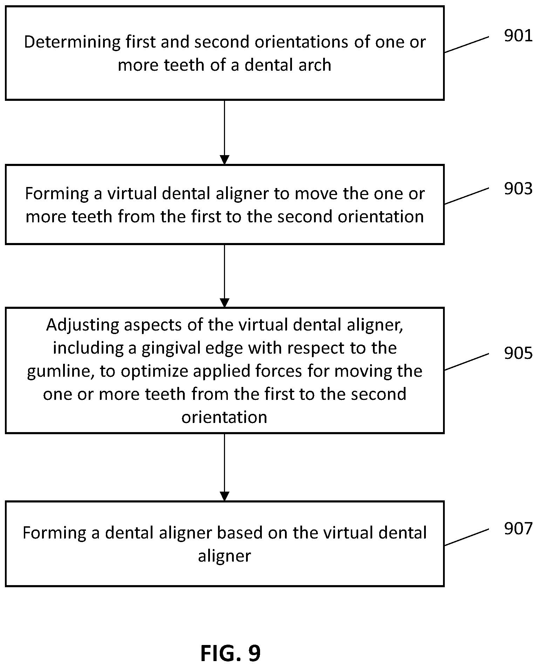

FIG. 9 illustrates a flowchart indicating an exemplary method of forming a dental aligner with a modified gingival edge for optimized tooth movement. At 901, a first and second orientation of one or more of teeth of a patient's dental arch are determined. In some cases, the first orientation may be an initial orientation of the one or more teeth in a stage of a treatment plan and the second orientation may be a target orientation in the stage of the treatment plan. The first and second orientations may be based on a model of the patient's dental arch, such as a virtual model (e.g., 3D virtual model) from a scan of the patient's teeth or a 3D mold.

At 903, a dental aligner to accept the teeth of the dental arch is formed. For example, a virtual model of the dental aligner may be formed based on a virtual model of the patient's dental arch. The dental aligner can include multiple cavities arranged to receive the teeth of the patient's dental arch. The shape of the walls that define the cavities may be in accordance with the second orientation of the one or more teeth (i.e., offset with respect to the first orientation of the one or more teeth). Thus, the cavity walls can apply repositioning forces to the one or more teeth, thereby urging the one or more teeth towards the second orientation.

At 905, aspects of the dental aligner are adjusted to optimize forces applied by the dental aligner for moving the one or more teeth from the first orientation to the second orientation, including adjusting a gingival edge of the dental aligner with respect to a gumline of the dental arch. In some examples, a computer-based simulation may be used to simulate the forces applied to the teeth by the virtual aligner. Using the virtual simulation, different aspects of the virtual aligner may be modified, and a resulting tooth movement may be calculated. This process may be iteratively adjusted until an optimal tooth movement path is achieved. Optimization goals vary depending on an overall treatment plan, treatment timing, patient comfort, extent of tooth movement, and other considerations. Optimal tooth movement factors may include optimal force/moment couple, optimal tipping (if any), and/or optimal root/control sweep. Each of the optimizations may be attained through modification of gingival edge for individual teeth or groups of teeth and considering neighboring tooth movements. A magnitude of the force system and direction can also be optimized to vary over time, for e.g., from one aligner to another aligner in a series, with time series as an optimization target input.

In some cases, at least a portion of the gingival edge is lengthened by adjusting the gingival edge in a direction toward the root apex (away from the crown) of the one or more teeth. This change increases the height of at least a portion of the dental aligner, thereby increasing a stiffness of at least a portion of the dental aligner. Such lengthening of the gingival edge may move a net repositioning force vector closer to the one or more centers of resistance of the one or more teeth. Such change may increase root control/sweep of the one or more teeth and/or decrease rotation/tipping of the one or more teeth. Such change may also increase an overall repositioning force applied to the one or more teeth. The extent to which the gingival edge extends past the gumline may vary depending on factors such as a desired amount of repositioning force, a desired amount of tooth translation (e.g., versus rotation/tipping), and patient comfort. For example, a gingival edge that is too long may cause irritation to the patient's gingiva, cause the dental aligner to apply an uncomfortably large amount of force to the patient's teeth, and/or make the dental aligner too stiff and difficult to place on or remove from the patient's dental arch.

In some cases, at least a portion of the gingival edge is shortened by adjusting the gingival edge in a direction toward the crown (away from the root apex) of the one or more teeth so that a net repositioning force vector is directed farther from the one or more centers of resistance of the one or more teeth. This change reduces the height of at least a portion of the dental aligner, thereby increasing a flexibility of at least a portion of the dental aligner. Such shortening of the gingival edge may also move a net repositioning force vector farther from the one or more centers of resistance of the one or more teeth. Such change may reduce root control/sweep of the one or more teeth and/or increase rotation/tipping of the one or more teeth. Such change may also reduce an overall repositioning force applied to the one or more teeth. In some cases, the gingival edge height is reduced to an extent that the one or more teeth experience little or no movement. The extent to which the gingival edge is adjusted toward the crown may vary depending on factors such as a desired amount of repositioning force (if any), a desired amount of tooth rotation/tipping (e.g., versus translation) (if any), and overall aligner stiffness.

In some cases, one or more sections of the dental aligner are adjusted to have a gingival edge with varied profile (e.g., FIG. 6). This may allow different forces applied to different teeth using the same dental aligner. For example, it may be desirable to move a first set of teeth faster than a second set of teeth using the same dental aligner. Such dental aligner may include a first section having a relatively long gingival edge for the first set of teeth and a second section having a relatively short gingival edge for the second set of teeth. In some examples, a first section of the dental aligner may have a relatively long gingival edge that increases the stiffness of the dental aligner, and a second section of the dental aligner may have a relatively short gingival edge (e.g., toward the crown relative to the gumline) that is flexible so that the dental aligner can be bent during placement on and removal from the patient's dental arch.

In some examples, the gingival edge may be modified to extend away from the patient's gingiva (e.g., 720a, FIG. 7), which may prevent the edge from contacting the patient's gingiva and thereby improve patient comfort. If the gingival edge is on a buccal side of the dental aligner, the gingival edge may be extended in the buccal direction. If the gingival edge is on a lingual or palatal side of the dental aligner, the gingival edge may be extended in the lingual or palatal direction. In some examples, the gingival edge may be modified to include corrugation features (e.g., 720b, FIG. 7), which may increase the stiffness of the dental aligner (or section of the dental aligner) and thereby may increase the reposition force applied by dental aligner. Any modifications to the gingival edge may be change the forces applied by the dental aligner and may therefore be considered during calculation of optimal tooth movements.

The gingival edge adjustments may be made along with other dimensional adjustments of the dental aligner to optimize movement of the one or more teeth. These other adjustments may be used in combination with the gingival edge adjustments during iterative optimization of tooth movement. Such other adjustments may include the addition of one or more attachment indentations (e.g., 506, FIG. 5), one or more cutouts (e.g., 850, FIG. 8), and/or one or more hooks (e.g., 860a/860b, FIG. 8).

At 907, once the virtual dental appliance is optimized, a physical dental appliance can be formed based on the virtual dental appliance model. The dental appliance may be made of one or more polymer materials. The dental appliance can be fabricated using any single or combination of manufacturing techniques. In some cases, at least part of the dental appliance is formed using an additive manufacturing technique (e.g., 3D printing). In some cases, at least part of the dental appliance is formed using a molding technique. In some examples, the gingival edge is cut to provide the specified edge profile. Such cutting methods can include laser cutting methods, such as any of those described in U.S. Patent No 10,421,152 B2.

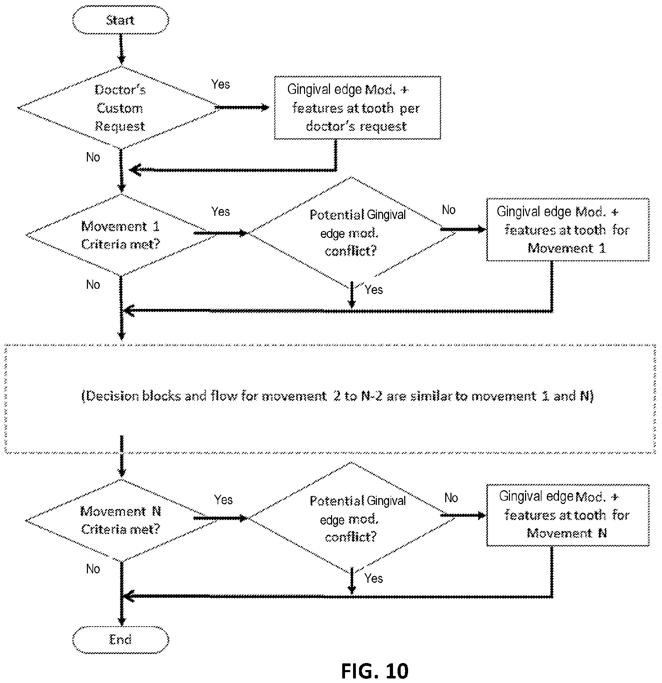

FIG. 10 illustrates an exemplary logic flow diagram indicating considerations for implementing one or more gingival edge modifications to one or more dental aligners. As indicated, a request from a prescriber (e.g., doctor) is made. The requested movement of each tooth is analyzed, and a determination is made as to whether there are any potential gingival edge modification conflicts for each tooth movement in the order of movement priority. If a previously placed gingival edge modification has no conflict with a lower priority gingival edge modification, both gingival edge modifications will be placed together.

It should be appreciated that all combinations of the foregoing concepts and additional concepts discussed in greater detail below (provided such concepts are not mutually inconsistent) are contemplated as being part of the inventive subject matter disclosed herein and may be used to achieve the benefits described herein.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

Any of the methods (including user interfaces) described herein may be implemented as software, hardware or firmware, and may be described as a non-transitory computer-readable storage medium storing a set of instructions capable of being executed by a processor (e.g., computer, tablet, smartphone, etc.), that when executed by the processor causes the processor to control perform any of the steps, including but not limited to: displaying, communicating with the user, analyzing, modifying parameters (including timing, frequency, intensity, etc.), determining, alerting, or the like. For example, any of the methods described herein may be performed, at least in part, by an apparatus including one or more processors having a memory storing a non-transitory computer-readable storage medium storing a set of instructions for the processes(s) of the method.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the example embodiments disclosed herein.

As described herein, the computing devices and systems described and/or illustrated herein broadly represent any type or form of computing device or system capable of executing computer-readable instructions, such as those contained within the modules described herein. In their most basic configuration, these computing device(s) may each comprise at least one memory device and at least one physical processor.

The term "memory" or "memory device," as used herein, generally represents any type or form of volatile or non-volatile storage device or medium capable of storing data and/or computer-readable instructions. In one example, a memory device may store, load, and/or maintain one or more of the modules described herein. Examples of memory devices comprise, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In addition, the term "processor" or "physical processor," as used herein, generally refers to any type or form of hardware-implemented processing unit capable of interpreting and/or executing computer-readable instructions. In one example, a physical processor may access and/or modify one or more modules stored in the above-described memory device. Examples of physical processors comprise, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the method steps described and/or illustrated herein may represent portions of a single application. In addition, in some embodiments one or more of these steps may represent or correspond to one or more software applications or programs that, when executed by a computing device, may cause the computing device to perform one or more tasks, such as the method step.

In addition, one or more of the devices described herein may transform data, physical devices, and/or representations of physical devices from one form to another. Additionally or alternatively, one or more of the modules recited herein may transform a processor, volatile memory, non-volatile memory, and/or any other portion of a physical computing device from one form of computing device to another form of computing device by executing on the computing device, storing data on the computing device, and/or otherwise interacting with the computing device.

The term "computer-readable medium," as used herein, generally refers to any form of device, carrier, or medium capable of storing or carrying computer-readable instructions. Examples of computer-readable media comprise, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

A person of ordinary skill in the art will recognize that any process or method disclosed herein can be modified in many ways. The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed.

The various exemplary methods described and/or illustrated herein may also omit one or more of the steps described or illustrated herein or comprise additional steps in addition to those disclosed. Further, a step of any method as disclosed herein can be combined with any one or more steps of any other method as disclosed herein.

The processor as described herein can be configured to perform one or more steps of any method disclosed herein. Alternatively or in combination, the processor can be configured to combine one or more steps of one or more methods as disclosed herein.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the invention. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present invention.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

In general, any of the apparatuses and methods described herein should be understood to be inclusive, but all or a sub-set of the components and/or steps may alternatively be exclusive, and may be expressed as "consisting of" or alternatively "consisting essentially of" the various components, steps, sub-components or sub-steps.

As used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc. Any numerical values given herein should also be understood to include about or approximately that value, unless the context indicates otherwise. For example, if the value "10" is disclosed, then "about 10" is also disclosed. Any numerical range recited herein is intended to include all sub-ranges subsumed therein. It is also understood that when a value is disclosed that "less than or equal to" the value, "greater than or equal to the value" and possible ranges between values are also disclosed, as appropriately understood by the skilled artisan. For example, if the value "X" is disclosed the "less than or equal to X" as well as "greater than or equal to X" (e.g., where X is a numerical value) is also disclosed. It is also understood that the throughout the application, data is provided in a number of different formats, and that this data, represents endpoints and starting points, and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

Although various illustrative embodiments are described above, any of a number of changes may be made to various embodiments without departing from the scope of the invention as described by the claims. For example, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the invention as it is set forth in the claims.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Such embodiments of the inventive subject matter may be referred to herein individually or collectively by the term "invention" merely for convenience and without intending to voluntarily limit the scope of this application to any single invention or inventive concept, if more than one is, in fact, disclosed. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method of forming a dental aligner (206, 210), comprising:
determining (901) a first orientation and a second orientation of a tooth of a virtual model of a patient's teeth as part of a treatment plan;
forming (903) a virtual dental aligner for moving the tooth from the first orientation to the second orientation, wherein forming the virtual dental aligner includes adjusting (905) at least a portion of a gingival edge (208, 212) to adjust a net repositioning force vector applied by the virtual dental aligner with respect to a center of resistance of the tooth; and
forming (907) the dental aligner (206, 210) based on the virtual dental aligner with the adjusted gingival edge (208, 212).

2. The method of claim 1, wherein at least a portion of the gingival edge (208, 212) is adjusted in a direction away from a root apex of the tooth so that the virtual dental aligner applies the net repositioning force vector closer to the center of resistance.

3. The method of claim 2, wherein adjusting the gingival edge (208, 212) in the direction away from the root apex applies a greater repositioning force to the tooth.

4. The method of claim 1, wherein at least a portion of the gingival edge (208, 212) is adjusted in a direction toward a root apex of the tooth so that the virtual dental aligner applies the net repositioning force vector farther from the center of resistance.

5. The method of claim 4, wherein adjusting the gingival edge (208, 212) in the direction toward the root apex applies a lesser repositioning force to the tooth.

6. The method of claim 1, wherein moving the tooth from the first orientation to the second orientation is in accordance with a stage of the treatment plan.

7. The method of claim 1, wherein the gingival edge (208, 212) is adjusted to minimize an amount of rotation of the tooth or is modified to achieve a target amount of rotation of the tooth.

8. The method of claim 1, further comprising forming at least one attachment feature within the virtual dental aligner that is shaped and sized to accept a corresponding at least one dental attachment attached to the tooth.

9. The method of claim 8, wherein interaction of the at least one dental attachment with the at least one attachment feature modifies the net repositioning force applied by the virtual dental aligner to the tooth.

10. The method of claim 1, further comprising forming at least a second portion of the gingival edge of the dental aligner at a gumline of the virtual model.

11. The method of claim 1, wherein the tooth is a first tooth and the at least a portion of the gingival edge (208, 212) is a first portion of the gingival edge, the method further comprising:
adjusting a second portion of the gingival edge to adjust a net repositioning force vector applied by the virtual dental aligner to a second tooth with respect to a second center of resistance of the second tooth.

12. The method of claim 11, wherein adjusting the gingival edge (208, 212) includes adjusting a first portion of the gingival edge in a direction toward a root apex of the first tooth and adjusting a second portion of the gingival edge in a direction away from the root apex of the second tooth.

13. The method of claim 1, wherein forming the virtual dental aligner includes modifying a wall shape of the virtual dental aligner to apply the net repositioning forces according to at least a segment of the treatment plan.

14. The method of claim 1, wherein forming the virtual dental aligner includes modifying a wall thickness of the virtual dental aligner to apply the net repositioning forces according to at least a segment of the treatment plan.

## Patentansprüche

1. Verfahren zur Herstellung einer Zahnschiene (206, 210), umfassend:
Bestimmen (901) einer ersten Ausrichtung und einer zweiten Ausrichtung eines Zahns eines virtuellen Modells der Zähne eines Patienten als Teil eines Behandlungsplans;
Herstellen (903) einer virtuellen Zahnschiene zum Bewegen des Zahns von der ersten Ausrichtung zu der zweiten Ausrichtung, wobei das Herstellen der virtuellen Zahnschiene Einstellen (905) von zumindest einem Abschnitt einer gingivalen Kante (208, 212) beinhaltet, um einen Nettorepositionierungskraftvektor, der durch die virtuelle Zahnschiene angewendet wird, in Bezug auf ein Widerstandszentrum des Zahns einzustellen; und
Herstellen (907) der Zahnschiene (206, 210) basierend auf der virtuellen Zahnschiene mit der eingestellten gingivalen Kante (208, 212).

2. Verfahren nach Anspruch 1, wobei zumindest ein Abschnitt der gingivalen Kante (208, 212) in einer Richtung weg von einer Wurzelspitze des Zahns eingestellt wird, sodass die virtuelle Zahnschiene den Nettorepositionierungskraftvektor näher an dem Widerstandszentrum anwendet.

3. Verfahren nach Anspruch 2, wobei das Einstellen der gingivalen Kante (208, 212) in der Richtung weg von der Wurzelspitze eine größere Repositionierungskraft auf den Zahn anwendet.

4. Verfahren nach Anspruch 1, wobei zumindest ein Abschnitt der gingivalen Kante (208, 212) in einer Richtung zu einer Wurzelspitze des Zahns eingestellt wird, sodass die virtuelle Zahnschiene den Nettorepositionierungskraftvektor weiter von dem Widerstandszentrum anwendet.

5. Verfahren nach Anspruch 4, wobei das Einstellen der gingivalen Kante (208, 212) in der Richtung zu der Wurzelspitze eine geringere Repositionierungskraft auf den Zahn anwendet.

6. Verfahren nach Anspruch 1, wobei das Bewegen des Zahns von der ersten Ausrichtung zu der zweiten Ausrichtung gemäß einer Phase des Behandlungsplans ist.

7. Verfahren nach Anspruch 1, wobei die gingivale Kante (208, 212) eingestellt wird, um eine Menge an Drehung des Zahns zu minimieren, oder modifiziert wird, um eine Zielmenge an Drehung des Zahns zu erreichen.

8. Verfahren nach Anspruch 1, ferner umfassend Herstellen von zumindest einem Befestigungsmerkmal innerhalb der virtuellen Zahnschiene, das geformt und bemessen ist, um eine entsprechende zumindest eine Zahnbefestigung aufzunehmen, die an dem Zahn befestigt ist.

9. Verfahren nach Anspruch 8, wobei Interaktion der zumindest einen Zahnbefestigung mit dem zumindest einen Befestigungsmerkmal die Nettorepositionierungskraft modifiziert, die durch die virtuelle Zahnschiene auf den Zahn angewendet wird.

10. Verfahren nach Anspruch 1, ferner umfassend Herstellen von zumindest einem zweiten Abschnitt der gingivalen Kante der Zahnschiene an einer Zahnfleischlinie des virtuellen Modells.

11. Verfahren nach Anspruch 1, wobei der Zahn ein erster Zahn ist und der zumindest eine Abschnitt der gingivalen Kante (208, 212) ein erster Abschnitt der gingivalen Kante ist, wobei das Verfahren ferner Folgendes umfasst:
Einstellen eines zweiten Abschnittes der gingivalen Kante, um einen Nettorepositionierungskraftvektor, der durch die virtuelle Zahnschiene auf einen zweiten Zahn angewendet wird, in Bezug auf ein zweites Widerstandszentrum des zweiten Zahns einzustellen.

12. Verfahren nach Anspruch 11, wobei das Einstellen der gingivalen Kante (208, 212) Einstellen eines ersten Abschnittes der gingivalen Kante in einer Richtung zu einer Wurzelspitze des ersten Zahns und Einstellen eines zweiten Abschnittes der gingivalen Kante in einer Richtung weg von der Wurzelspitze des zweiten Zahns beinhaltet.

13. Verfahren nach Anspruch 1, wobei das Herstellen der virtuellen Zahnschiene Modifizieren einer Wandform der virtuellen Zahnschiene beinhaltet, um die Nettorepositionierungskräfte gemäß zumindest einem Segment des Behandlungsplans anzuwenden.

14. Verfahren nach Anspruch 1, wobei das Herstellen der virtuellen Zahnschiene Modifizieren einer Wanddicke der virtuellen Zahnschiene beinhaltet, um die Nettorepositionierungskräfte gemäß zumindest einem Segment des Behandlungsplans anzuwenden.

## Revendications

1. Procédé de formation d'un aligneur dentaire (206, 210), comprenant :
la détermination (901) d'une première orientation et d'une seconde orientation d'une dent d'un modèle virtuel de dents d'un patient dans le cadre d'un plan de traitement ;
la formation (903) d'un aligneur dentaire virtuel pour déplacer la dent de la première orientation à la seconde orientation, ladite formation de l'aligneur dentaire virtuel comprenant l'ajustement (905) d'au moins une partie d'un bord gingival (208, 212) de manière à ajuster un vecteur de force de repositionnement net appliqué par l'aligneur dentaire virtuel par rapport à un centre de résistance de la dent ; et
la formation (907) de l'aligneur dentaire (206, 210) sur la base de l'aligneur dentaire virtuel avec le bord gingival ajusté (208, 212).

2. Procédé selon la revendication 1, au moins une partie du bord gingival (208, 212) étant ajustée dans une direction s'éloignant d'un sommet de racine de la dent de sorte que l'aligneur dentaire virtuel applique le vecteur de force de repositionnement net plus près du centre de résistance.

3. Procédé selon la revendication 2, ledit ajustement du bord gingival (208, 212) dans la direction s'éloignant du sommet de la racine appliquant une force de repositionnement plus grande sur la dent.

4. Procédé selon la revendication 1, au moins une partie du bord gingival (208, 212) étant ajustée dans une direction vers un sommet de racine de la dent de sorte que l'aligneur dentaire virtuel applique le vecteur de force de repositionnement net plus loin du centre de résistance.

5. Procédé selon la revendication 4, ledit ajustement du bord gingival (208, 212) dans la direction vers le sommet de la racine appliquant une force de repositionnement plus faible sur la dent.

6. Procédé selon la revendication 1, ledit déplacement de la dent de la première orientation à la seconde orientation étant conforme à une étape du plan de traitement.

7. Procédé selon la revendication 1, ledit bord gingival (208, 212) étant ajusté de manière à minimiser la quantité de rotation de la dent ou étant modifié de manière à atteindre la quantité cible de rotation de la dent.

8. Procédé selon la revendication 1, comprenant en outre la formation d'au moins un élément de fixation à l'intérieur de l'aligneur dentaire virtuel qui est façonné et dimensionné de manière à accepter au moins une fixation dentaire correspondante fixée à la dent.

9. Procédé selon la revendication 8, ladite interaction de ladite au moins une fixation dentaire avec ledit au moins un élément de fixation modifiant la force de repositionnement nette appliquée par l'aligneur dentaire virtuel sur la dent.

10. Procédé selon la revendication 1, comprenant en outre la formation d'au moins une seconde partie du bord gingival de l'aligneur dentaire au niveau d'une limite gingivale du modèle virtuel.

11. Procédé selon la revendication 1, ladite dent étant une première dent et ladite au moins une partie du bord gingival (208, 212) étant une première partie du bord gingival, ledit procédé comprenant en outre :
l'ajustement d'une seconde partie du bord gingival de manière à ajuster un vecteur de force de repositionnement net appliqué par l'aligneur dentaire virtuel sur une seconde dent par rapport à un second centre de résistance de la seconde dent.

12. Procédé selon la revendication 11, ledit ajustement du bord gingival (208, 212) comprenant l'ajustement d'une première partie du bord gingival dans une direction vers un sommet de racine de la première dent et l'ajustement d'une seconde partie du bord gingival dans une direction s'éloignant du sommet de la racine de la seconde dent.

13. Procédé selon la revendication 1, ladite formation de l'aligneur dentaire virtuel comprenant la modification d'une forme de paroi de l'aligneur dentaire virtuel de manière à appliquer les forces de repositionnement nettes conformément à au moins un segment du plan de traitement.

14. Procédé selon la revendication 1, ladite formation de l'aligneur dentaire virtuel comprenant la modification d'une épaisseur de paroi de l'aligneur dentaire virtuel de manière à appliquer les forces de repositionnement nettes conformément à au moins un segment du plan de traitement.
